# EUROPÄISCHE PATENTANMELDUNG

(11) **EP 4 748 898 A1**
(43) Veröffentlichungstag der Anmeldung: **27.05.2026**
(21) Anmeldenummer: 25214518.0
(22) Anmeldetag: 10.11.2025
(51) Int. Cl.: C09J 7/29, G09F 3/10

(54) **HAFTETIKETT UND VERFAHREN ZUR HERSTELLUNG EINES HAFTETIKETTS**

(30) Priorität: 25.11.2024 DE 102024134694
(71) Anmelder: All4Labels Group GmbH, 22969 Witzhave (DE)
(72) Erfinder: Hantel, Gero-Constantin, 22969 Witzhave (DE)
(74) Vertreter: RGTH

(57) **Zusammenfassung**

Die Erfindung betrifft ein Haftetikett (100) zum Verspenden auf Produktverpackungen (10), insbesondere auf Kunststofflaschen (101), und ein Verfahren (200) zur Herstellung eines solchen Haftetiketts (100). Das Haftetikett (100) weist eine Basisfolie (11) aus Polyolefin mit einer Dicke von 80 µm bis 110 µm, eine partielle oder vollflächige Klebstoffbeschichtung (14) bestehend aus einem Acrylatklebstoff mit einer Anfangshaftung nach Finat FTM9 (N/25 mm) von ≥ 10, eine vollflächige Beschichtung bestehend aus einem Drucklack (15) und eine vollflächige erste Bedruckung mit mindestens einer ersten Druckfarbe (16) auf, wobei die Druckfarbe (16) im Flexodruckverfahren mittels einer ersten Rasterwalze (191) auf den Drucklack (15) der Basisfolie (11) aufgetragen ist, wobei die erste Rasterwalze (192) eine Slalom-Gravur (201) besitzt. Das Verfahren (200) zum Herstellen des Haftetiketts (100) umfasst die Schritten: Bereitstellen (50) einer Basisfolie (11) aus Polyolefin mit einer Dicke von 80 µm bis 110 µm, Auftragen (51) einer partiellen oder vollflächigen Klebstoffbeschichtung (14) bestehend aus einem Acrylatklebstoff mit einer Anfangshaftung nach Finat FTM9 (N/25 mm) von ≥ 10, Auftragen (52) einer vollflächigen Beschichtung bestehend aus einem Drucklack (15) und Auftragen (53) einer vollflächigen ersten Bedruckung auf den Drucklack (15) der Basisfolie (11) mit mindestens einer ersten Druckfarbe (16) im Flexodruckverfahren mittels einer ersten Rasterwalze, die eine Slalom-Gravur besitzt.

## Beschreibung

Die Erfindung betrifft ein Haftetikett und ein Verfahren zur Herstellung eines solchen Haftetiketts.

Moderne Produktverpackungen besitzen in der Regel großflächige Haftetiketten, auf denen produktrelevante Informationen und sonstige Motive wiedergegeben sind. Eine qualitativ hochwertige Verspendung von solchen Haftetiketten zeichnet sich insbesondere dadurch aus, dass sich die Haftetiketten nach der Etikettierung vollflächig auf der Produktverpackung anlegen, sich dauerhaft an der Oberfläche der Produktverpackung verankern und sich nicht nach einiger Zeit partiell oder vollständig von der Produktverpackung lösen.

Die potentielle Langlebigkeit eines verspendeten Haftetiketts hängt von unterschiedlichen Faktoren ab. Insbesondere bei Haftetiketten mit vergleichsweise dünnen und/oder flexiblen Obermaterial-Folien bzw. Basisfolien führen beispielsweise opake und/oder vollflächige Bedruckungen, die in der Regel mittels Siebduck oder im Flexodruckverfahren aufgetragen werden, aufgrund der materialabhängigen Oberflächenspannung häufig zu einem sog. Curl und damit zu einem partiellen Ablösen des verspendeten Heftetiketts von der Produktoberfläche. Das partielle Ablösen von Haftetiketten ist insbesondere bei Kunststoffbehältern mit apolaren Oberflächen zu beobachten.

Das partielle Ablösen von applizierten Haftetiketten lässt sich nicht mittels stärker haftender Klebstoffe vermeiden, weil die Verwendung solcher Klebstoffe mit anderen Nachteilen verbunden ist, wie beispielsweise dem sog. Klebstoffbluten bei Hotmeltklebstoffen.

Es ist daher die Aufgabe der vorliegenden Erfindung, die Nachteile von bekannten Haftetiketten zu lösen. Insbesondere soll ein Haftetikett und ein Verfahren zur Herstellung eines solchen Haftetiketts angegeben werden, wobei das verspendete Haftetikett dauerhaft und ohne partielle Ablösungen an der Produktverpackung haften soll.

Diese Aufgabe wird durch das Haftetikett nach Anspruch 1 und durch das Verfahren zur Herstellung eines solchen Haftetiketts gelöst.

Das erfindungsgemäße Haftetikett zum Verspenden auf Produktverpackungen, insbesondere auf Kunststofflaschen, weist auf:
- eine Basisfolie aus Polyolefin mit einer Dicke von 80 µm bis 110 µm,
- eine partielle oder vollflächige Klebstoffbeschichtung bestehend aus einem Acrylatklebstoff mit einer Anfangshaftung nach Finat FTM9 (N/25 mm) von ≥ 10,
- eine vollflächige Beschichtung bestehend aus einem Drucklack und
- eine vollflächige erste Bedruckung mit mindestens einer ersten Druckfarbe, wobei
- die Druckfarbe im Flexodruckverfahren mittels einer ersten Rasterwalze (Aniloxwalze) auf den Drucklack der Basisfolie aufgetragen ist, wobei die erste Rasterwalze eine Slalom-Gravur besitzt.

Das erfindungsgemäße Verfahren zum Herstellen eines Haftetiketts umfasst die Schritte:
- Bereitstellen einer Basisfolie aus Polyolefin mit einer Dicke von 80 µm bis 110 µm,
- Auftragen einer partiellen oder vollflächigen Klebstoffbeschichtung bestehend aus einem Acrylatklebstoff mit einer Anfangshaftung nach Finat FTM9 (N/25 mm) von ≥ 10,
- Auftragen einer vollflächigen Beschichtung bestehend aus einem Drucklack und
- Auftragen einer vollflächigen ersten Bedruckung auf den Drucklack der Basisfolie mit mindestens einer ersten Druckfarbe im Flexodruckverfahren mittels einer ersten Rasterwalze, die eine Slalom-Gravur besitzt.

Die partielle oder vollflächige Klebstoffbeschichtung aus dem Acrylatklebstoff ist angeordnet und ausgebildet, damit das Haftetikett an der Produktverpackung haftet. Die Finat- Testmethode FTM9 ist ein genormtes Testverfahren, um die Anfangshaftung eines selbstklebenden Materials, wie beispielsweise eines Haftklebstoffs, zu quantifizieren. Der Drucklack wird als Grundierung der Basisfolie aufgetragen und erlaubt eine dauerhafte Bedruckung mit der ersten Druckfarbe, die anderenfalls nicht - oder zumindest nicht dauerhaft - an der Oberfläche der Polyolefin-Basisfolie haften würde. Die Rasterwalze (Aniloxwalze) ist vorzugsweise als Keramikrasterwalze ausgebildet. Eine solche Rasterwalze kann verschiedene Gravurtypen aufweisen, um Farbe aufzunehmen und diese auf das Haftetikett zu übertragen, das an der rotierenden Rasterwalze vorbeigeführt wird. Die hier angesprochene Slalom-Gravur umfasst eine Vielzahl von parallel zueinander angeordneten Vertiefungen, die schlangenförmig bzw. mäandrierend verlaufen und die Rasterwalze vollständig umringen. Durch die Verwendung der Rasterwalze mit einer Slalom-Gravur hat sich überraschenderweise gezeigt, dass eine hohe Opazität mit einem vergleichsweise geringeren Farbauftrag erzielt werden kann. Hierdurch werden Spannungen reduziert, die die ausgehärtete Farbe auf das Haftetikett ausübt, wodurch sich das partielle Ablösen eines etikettierten Haftetiketts reduziert.

Vorteilhafte Weiterbildungen des Haftetiketts und des Verfahrens werden in den Unteransprüchen angegeben.

Nach einer vorteilhaften Ausführungsform der Erfindung ist vorgesehen, dass die Basisfolie aus Polyolefin eine Dicke von 85 µm bis 95 µm aufweist. Eine Basisfolie mit einer solchen Dicke besitzt besondere flexible Eigenschaften, sodass das Haftetikett auch an Produktverpackungen mit kleinen Krümmungsradien dauerhaft fixierbar ist.

Damit der Drucklack auf der Basisfolie besser haftet, ist nach einer vorteilhaften Weiterbildung der Erfindung vorgesehen, dass die Basisfolie coronisiert ist. Es ist auch die Verwendung einer unbehandelten Basisfolie vorgesehen.

Vorzugsweise besteht die Polyolefin-Basisfolie aus Polyethylen (PE) oder aus Polypropylen (PP).

Sofern die Basisfolie aus Polyethylen besteht, ist die Basisfolie vorzugsweise als co-extrudierte Mehrschichtfolie ausgebildet, wobei die Mehrschichtfolie in Bezug auf ihr Volumen vorzugsweise einen vergleichsweise höheren HDPE-Anteil (High-Density-Poyethylen) und einen vergleichsweise geringeren LDPE-Anteil (Low-Density-Polyethylen) aufweist. Insbesondere ist vorgesehen, dass die Mehrschichtfolie 3-lagig ausgebildet ist und einen Kern aus HDPE mit einer Dicke von 70 µm bis 105 µm, insbesondere einer Dicke von 80 µm oder 95 µm, und beidseitige Außenlagen aus LDPE mit einer Dicke von 0,5 µm bis 1,5 µm, insbesondere einer Dicke von 1 µm, besitzt.

Nach einer vorteilhaften Weiterbildung ist vorgesehen, dass die erste Druckfarbe eine LED-UV-Druckfarbe ist, die nach dem Auftragen auf den Drucklack zum Aushärten mittels einer LED-UV-Lichtquelle bestrahlt wird. Die Zusammensetzung der LED-UV-Druckfarbe ist dabei in der Weise an die zur verwendende LED-UV-Lichtquelle angepasst, dass das diskrete UV-Wellenlängenspektrum das Aushärten der LED-UV-Druckfarbe bewirkt. Alternativ hierzu ist vorgesehen, dass die erste Farbe eine lösemittelhaltige Polyurethanfarbe ist. Es hat sich überraschenderweise gezeigt, dass sowohl LED-UV-Druckfarben als auch lösemittelhaltige Polyurethanfarben im Vergleich zu UV-Druckfarben im ausgehärteten Zustand weicher sind, so dass diese Druckfarben im ausgehärteten Zustand eine geringere Spannung auf das Haftetikett erzeugen. Hierdurch wird das partielle Ablösen von applizierten Haftetiketten weiter reduziert.

In der Praxis weist die vollflächige erste Bedruckung mit der ersten Druckfarbe eine zweite partielle Bedruckung mit mindestens einer zweiten Druckfarbe auf. Hierbei handelt es sich insbesondere um Schriftzüge, Verzierungen oder sonstige Motive des Haftetiketts. Die zweite Bedruckung wird vorzugsweise ebenfalls mit einer weiteren Rasterwalze aufgetragen.

Vorzugsweise ist vorgesehen, dass das Haftetikett eine vollflächige (Außen-) Beschichtung bestehend aus einem Schutzlack aufweist, wobei der Schutzlack mittels einer zweiten Rasterwalze mit einer Slalom-Gravur aufgetragen ist. Auch in Bezug auf den Schutzlack hat sich überraschenderweise gezeigt, dass hierdurch eine vergleichsweise geringere Menge an Schutzlack erforderlich ist, um eine funktionsgleiche Schutzwirkung zu erhalten, wodurch die Spannung reduziert wird, die der ausgehärtete Schutzlack auf das Haftetikett ausübt, wodurch sich das partielle Ablösen eines etikettierten Haftetiketts weiter reduziert.

Konkrete Ausführungsformen der vorliegenden Erfindung werden nachfolgend mit Bezug auf die Figuren erläutert. Es zeigen:
- Fig. 1: eine schematische Querschnittsansicht eines applizierten Haftetiketts;
- Fig. 2: ein Ablaufdiagramm;
- Fig. 3: eine Rasterwalze.

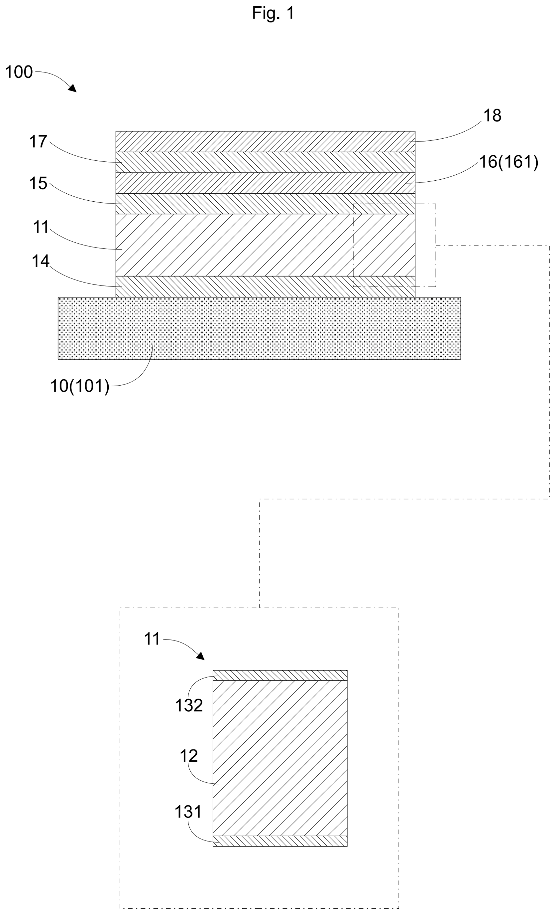

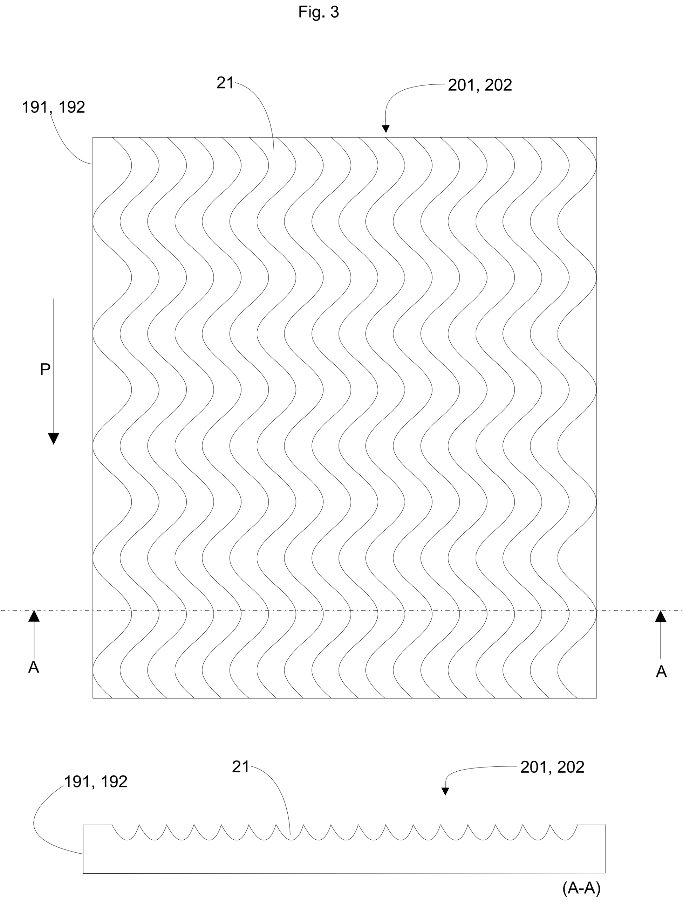

Fig. 1 zeigt eine schematische Querschnittsansicht eines Haftetiketts 100, das auf einer Produktverpackung 10 in Form einer Kunststoffflasche 101 verspendet ist. Das Haftetikett 100 besitzt eine Basisfolie 11 aus Polyolefin mit einer Dicke von 90 µm. Das Polyolefin besteht im dargestellten Ausführungsbeispiel aus Polyethylen. In der Detailansicht der Fig. 1 ist dargestellt, dass die Basisfolie 11 als co-extrudierte Mehrschichtfolie ausgebildet ist, wobei die Mehrschichtfolie in Bezug auf ihr Volumen vorzugsweise einen vergleichsweise höheren HDPE-Anteil und einen vergleichsweise geringeren LDPE-Anteil aufweist. Konkret ist die Mehrschichtfolie 3-lagig ausgebildet und besitzt einen Kern 12 aus HDPE mit einer Dicke von 88 µm und beidseitige Außenlagen 131, 132 aus LDPE mit einer Dicke von jeweils 1 µm. Das Haftetikett 100 weist eine vollflächige Klebstoffbeschichtung 14 auf, die aus einem Acrylatklebstoff mit einer Anfangshaftung nach Finat FTM9 von ≥ 10 besteht. Das Haftetikett 100 besitzt eine vollflächige Beschichtung, die aus einem Drucklack 15 besteht. Ferner besitzt das Haftetikett 100 eine vollflächige erste Bedruckung mit einer ersten Druckfarbe 16, wobei die erste Druckfarbe im Flexodruckverfahren mittels einer ersten Rasterwalze 191 (s. Fig. 3) auf den Drucklack 15 der Basisfolie 11 aufgetragen ist, wobei die erste Rasterwalze 191 eine Slalom -Gravur 201 besitzt. Die erste Druckfarbe 16 ist im gezeigten Ausführungsbeispiel eine LED-UV-Druckfarbe 161, die nach dem Auftragen auf den Drucklack 15 zum Aushärten mittels einer (nicht gezeigten) LED-UV-Lichtquelle bestrahlt wird. Die vollflächige erste Bedruckung mit der ersten Druckfarbe 16 weist eine zweite partielle Bedruckung mit mindestens einer zweiten Druckfarbe 17 auf. Im dargestellten Ausführungsbeispiel handelt es sich um einen Schriftzug. Die zweite Bedruckung wird ebenfalls mit einer weiteren (nicht dargestellten) Rasterwalze aufgetragen. Schließlich besitzt das Haftetikett 100 eine vollflächige Beschichtung bestehend aus einem Schutzlack 18, wobei der Schutzlack 18 mittels einer zweiten Rasterwalze 192 (s. Fig. 3) mit einer Slalom-Gravur 202 aufgetragen ist.

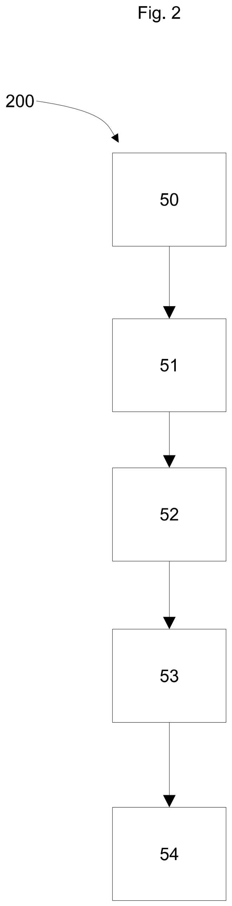

Fig. 2 zeigt ein Ablaufdiagramm eines Verfahrens 200 zum Herstellen eines Haftetiketts 100. Das Verfahren 200 umfasst die Schritte:
- Bereitstellen 50 einer Basisfolie 11 aus Polyolefin mit einer Dicke von 80 µm bis 110 µm,
- Auftragen 51 einer partiellen oder vollflächigen Klebstoffbeschichtung 14 bestehend aus einem Acrylatklebstoff mit einer Anfangshaftung nach Finat FTM9 (N/25 mm) von ≥ 10,
- Auftragen 52 einer vollflächigen Beschichtung bestehend aus einem Drucklack 15 und
- Auftragen 53 einer vollflächigen ersten Bedruckung auf den Drucklack 15 der Basisfolie 11 mit mindestens einer ersten Druckfarbe 16 im Flexodruckverfahren mittels einer ersten Rasterwalze 191 (s. Fig. 3), die eine Slalom-Gravur 201 besitzt, wobei die erste Druckfarbe 16 eine LED-UV-Druckfarbe 161 ist, die nach dem Auftragen auf den Drucklack 15 zum Aushärten mittels einer LED-UV-Lichtquelle bestrahlt wird.
- Auftragen 54 einer vollflächigen Beschichtung bestehend aus einem Schutzlack 18 im Flexodruckverfahren mittels einer zweiten Rasterwalze 192 (s. Fig. 3) mit einer Slalom-Gravur 202.

Fig. 3 zeigt in ausschnittsweise die Draufsicht der zylinderförmigen Rasterwalze 191, 192, die in Pfeilrichtung P drehbar ist, und eine Querschnittsansicht entlang der Querschnittsebene A-A. Die Rasterwalze 191, 192 weist die Slalom-Gravur 201, 202 bestehend aus eine Vielzahl von parallel zueinander ausgerichteten Vertiefungen 21 auf, die die Rasterwalze 191, 192 mäandrierend bzw. schlangenförmig umringen. Bei der bestimmungsgemäßen Verwendung der Rasterwalze nehmen die Vertiefungen 21 Farbe oder eine sonstige Substanz auf, die auf ein Substrat, wie beispielsweise ein Haftetikett, übertragen wird, das unter Druckbeaufschlagung an der Rasterwalze 191, 192 vorbeigeführt wird.

### Bezugszeichen

- 100: Haftetikett
- 200: Verfahren
- 10: Produktverpackung
- 101: Kunststoffflasche
- 11: Basisfolie
- 12: Kern
- 131: Außenlage
- 132: Außenlage
- 14: Klebstoffbeschichtung
- 15: Drucklack
- 16: erste Druckfarbe
- 161: LED-UV-Druckfarbe
- 17: zweite Druckfarbe
- 18: Drucklack
- 191: Rasterwalze
- 192: Rasterwalze
- 201: Slalom-Gravur
- 202: Slalom-Gravur
- 21: Vertiefung

- 50: Bereitstellen
- 51: Auftragen
- 52: Auftragen
- 53: Auftragen
- 54: Auftragen

- P: Pfeilrichtung

## Patentansprüche

1. Haftetikett (100) zum Verspenden auf Produktverpackungen (10), insbesondere auf Kunststofflaschen (101), **dadurch gekennzeichnet, dass** das Haftetikett (100) aufweist:
• eine Basisfolie (11) aus Polyolefin mit einer Dicke von 80 µm bis 110 µm,
• eine partielle oder vollflächige Klebstoffbeschichtung (14) bestehend aus einem Acrylatklebstoff mit einer Anfangshaftung nach Finat FTM9 (N/25 mm) von ≥ 10,
• eine vollflächige Beschichtung bestehend aus einem Drucklack (15) und
• eine vollflächige erste Bedruckung mit mindestens einer ersten Druckfarbe (16), wobei
• die Druckfarbe (16) im Flexodruckverfahren mittels einer ersten Rasterwalze (191) auf den Drucklack (15) der Basisfolie (11) aufgetragen ist, wobei die erste Rasterwalze (192) eine Slalom-Gravur (201) besitzt.

2. Haftetikett (100) nach Anspruch 1, **dadurch gekennzeichnet, dass** die Basisfolie (11) aus Polyolefin eine Dicke von 85 µm bis 95 µm aufweist.

3. Haftetikett (100) nach Anspruch 1 oder 2, **dadurch gekennzeichnet, dass** die Basisfolie (11) coronisiert oder unbehandelt ist.

4. Haftetikett (100) nach einem der Ansprüche 1 bis 3, **dadurch gekennzeichnet, dass** die Basisfolie (11) aus Polyolefin aus Polyethylen (PE) oder aus Polypropylen (PP) besteht.

5. Haftetikett (100) nach Anspruch 4, **dadurch gekennzeichnet, dass** die Basisfolie (11) aus Polyethylen als co-extrudierte Mehrschichtfolie ausgebildet ist, wobei die Mehrschichtfolie in Bezug auf ihr Volumen vorzugsweise einen vergleichsweise höheren HDPE-Anteil und einen vergleichsweise geringeren LDPE-Anteil aufweist.

6. Haftetikett (100) nach Anspruch 5, **dadurch gekennzeichnet, dass** die Mehrschichtfolie 3-lagig ausgebildet ist und einen Kern (12) aus HDPE mit einer Dicke von 70 µm bis 105 µm, insbesondere einer Dicke von 80 µm oder 95 µm, und beidseitige Außenlagen (131, 132) aus LDPE mit einer Dicke von 0,5 µm bis 1,5 µm, insbesondere einer Dicke von 1 µm, besitzt.

7. Haftetikett (100) nach einem der Ansprüche 1 bis 6, **dadurch gekennzeichnet, dass** die erste Druckfarbe (16) eine LED-UV-Druckfarbe (161) ist, die nach dem Auftragen auf den Drucklack (15) zum Aushärten mittels einer LED-UV-Lichtquelle bestrahlt wird.

8. Haftetikett (100) nach einem der Ansprüche 1 bis 6, **dadurch gekennzeichnet, dass** die erste Druckfarbe (16) eine lösemittelhaltige Polyurethanfarbe ist.

9. Haftetikett (100) nach einem der Ansprüche 1 bis 8, **dadurch gekennzeichnet, dass** das Haftetikett (100) eine vollflächige Beschichtung bestehend aus einem Schutzlack (17) aufweist, wobei der Schutzlack (18) mittels einer zweiten Rasterwalze (192) mit einer Slalom-Gravur (202) aufgetragen ist.

10. Verfahren (200) zum Herstellen eines Haftetiketts (100) nach einem der Ansprüche 1 bis 9 mit den Schritten:
• Bereitstellen (50) einer Basisfolie (11) aus Polyolefin mit einer Dicke von 80 µm bis 110 µm,
• Auftragen (51) einer partiellen oder vollflächigen Klebstoffbeschichtung (14) bestehend aus einem Acrylatklebstoff mit einer Anfangshaftung nach Finat FTM9 (N/25 mm) von ≥ 10,
• Auftragen (52) einer vollflächigen Beschichtung bestehend aus einem Drucklack (15) und
• Auftragen (53) einer vollflächigen ersten Bedruckung auf den Drucklack (15) der Basisfolie (11) mit mindestens einer ersten Druckfarbe (16) im Flexodruckverfahren mittels einer ersten Rasterwalze, die eine Slalom-Gravur (201) besitzt.

11. Verfahren (200) nach Anspruch 10, **dadurch gekennzeichnet, dass** die die erste Druckfarbe (16) eine LED-UV-Druckfarbe (161) ist, die nach dem Auftragen (53) auf den Drucklack (15) zum Aushärten mittels einer LED-UV-Lichtquelle bestrahlt wird, oder eine lösemittelhaltige Polyurethanfarbe.

12. Verfahren (200) nach einem der Ansprüche 10 oder 11, **gekennzeichnet durch** Auftragen (54) einer vollflächigen Beschichtung bestehend aus einem Schutzlack (18) im Flexodruckverfahren mittels einer zweiten Rasterwalze (192) mit einer Slalom-Gravur (202).
